(19) Europäisches Patentamt
European Patent Office
Office européen des brevets

(11) **EP 2 304 866 B1**

(12) **EUROPÄISCHE PATENTSCHRIFT**

(45) Veröffentlichungstag und Bekanntmachung des Hinweises auf die Patenterteilung:
**04.04.2012 Patentblatt 2012/14**

(21) Anmeldenummer: **09780863.8**

(22) Anmeldetag: **21.07.2009**

(51) Int Cl.:
***H02K 11/00*** *(2006.01)*

(86) Internationale Anmeldenummer:
**PCT/EP2009/059341**

(87) Internationale Veröffentlichungsnummer:
**WO 2010/010081 (28.01.2010 Gazette 2010/04)**

(54) **VERFAHREN UND ANORDNUNG ZUR LAGERSTROMÜBERWACHUNG EINER ELEKTRISCHEN MASCHINE**

METHOD AND SYSTEM FOR MONITORING THE BEARING CURRENT OF AN ELECTRICAL MACHINE

PROCÉDÉ ET SYSTÈME POUR CONTRÔLER LE COURANT DE PALIER D'UNE MACHINE ÉLECTRIQUE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **25.07.2008 DE 102008035613**

(43) Veröffentlichungstag der Anmeldung:
**06.04.2011 Patentblatt 2011/14**

(73) Patentinhaber: **Siemens Aktiengesellschaft 80333 München (DE)**

(72) Erfinder:
- **KRETSCHMER, Hans-Richard 10999 Berlin (DE)**
- **STECKENBORN, Arno 13589 Berlin (DE)**
- **THEILE, Oliver 13437 Berlin (DE)**

(56) Entgegenhaltungen:
WO-A-89/10533     WO-A-2006/134068
US-A- 4 147 982     US-A- 4 511 837

EP 2 304 866 B1

**Beschreibung**

Die Erfindung bezieht sich auf ein Verfahren mit den Merkmalen gemäß dem Oberbegriff des Anspruchs 1.

Verfahren dieser Art sind beispielsweise aus der internationalen Patentanmeldung WO 2006/134068 bekannt. Eines der in dieser Schrift beschriebenen Verfahren sieht vor, die zwischen einer Welle der elektrischen Maschine und dem Gehäuse anliegende elektrische Spannung mit Hilfe elektrischer Kontaktbürsten, die mechanisch an der Welle anliegen und diese elektrisch kontaktieren, zu messen. Die in dieser Weise gemessene Spannung wird in einer Auswerteinrichtung ausgewertet, und es wird ein Messsignal erzeugt, wenn ein Lagerstrom auftritt.

Die genannte Druckschrift offenbart darüber hinaus ein anderes Verfahren zur Lagerstromüberwachung; bei diesem anderen Verfahren ist ein die Welle der Maschine lagerndes Lager von dem Maschinengehäuse elektrisch isoliert. Es wird die elektrische Spannung zwischen Lager und Gehäuse gemessen und ausgewertet, um ein Lagerstromereignis zu detektieren.

Gemäß der US 4,147,982 ist es bekannt, dass eine Messapparatur zur Messung von Spannungen zwischen einer Welle und den Lagerringen dadurch gemessen werden kann, dass eine elektrische Verbindung zwischen den beiden die Welle lagernden Lagerringen geschaffen wird. In diese elektrische Verbindung kann dann ein Hochpassfilter und ein Hochfrequenzdetektor eingesetzt werden, der ein Ausgangssignal zur Auswertung liefert.

Gemäß der US 4,511,837 ist es außerdem bekannt, dass in die Gehäusestruktur ein leitfähiger Messring isolierend eingebettet werden kann, wobei dieser ein Lager umschließt, welches seinerseits eine Welle lagert. Eine Messapparatur kann an den Messring und die Welle angeschlossen werden, wobei Änderungen der Kapazität gemessen werden können. In dem so gebildeten Zwischenraum zwischen Messring und Welle befindet sich das komplette Wälzlager für die Welle.

Der Erfindung liegt die Aufgabe zugrunde, ein Verfahren anzugeben, mit dem sich eine Lagerstromüberwachung besonders einfach und mit möglichst wenig Aufwand durchführen lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mit einer in einem Abstand zu der Welle angeordneten Elektrode und mit der Welle - aufgrund des Spalts zwischen Elektrode und Welle - eine Messkapazität gebildet wird und ein elektrischer Verschiebestrom gemessen wird, der im Falle einer zeitlichen Änderung der zwischen der Welle und dem Gehäuse anliegenden Spannung durch diese Messkapazität fließt, und ein einen Lagerstromfluss anzeigendes Messsignal erzeugt wird, wenn der Verschiebestrom oder eine mit diesem Verschiebestrom gebildete Messgröße ein vorgegebenes Auslösekriterium erfüllt.

Ein wesentlicher Vorteil des erfindungsgemäßen Verfahrens ist darin zu sehen, dass bei diesem keine Kontaktbürsten erforderlich sind, um eine Messung einer Spannungsänderung der an der Welle anliegenden Welle-Gehäuse-Spannung zu ermöglichen. So ist nämlich bei dem erfindungsgemäßen Verfahren im Unterschied zum Stand der Technik vorgesehen, nicht etwa die an der Welle anliegende Spannung als solche zu messen, sondern den im Falle einer Spannungsänderung von der Welle abfließenden kapazitiven elektrischen Verschiebestrom und diesen Verschiebestrom auszuwerten. Der Verschiebestrom wird mit einer Messelektrode gemessen, die in einem Abstand zu der Welle, also berührungslos, angeordnet ist und mit der Welle eine Kapazität bildet. Aufgrund der Messung des elektrischen Verschiebestroms ist also keine elektrische Kontaktierung der Welle erforderlich, so dass auf Kontaktbürsten, die verschleißabhängig sind und eine stete Wartung der Maschine erfordern, verzichtet werden kann.

Ein weiterer wesentlicher Vorteil der Erfindung ist darin zu sehen, dass diese bei beliebigen elektrischen Maschinen eingesetzt werden kann; so kann eine Messung von Lagerstromereignissen unabhängig davon durchgeführt werden, ob die Lager gegenüber dem Gehäuse isoliert sind oder nicht.

Besonders bevorzugt wird die Messkapazität mit einer Elektrode gebildet, die ein kreisförmiges Loch aufweist, durch das die Welle hindurchgeführt ist und das konzentrisch zu der Welle derart angeordnet ist, dass der Spalt ringförmig ist. Durch eine kreisförmige Innenkontur und einen kreisförmigen Spalt lässt sich vermeiden, dass es zu Messfehlern kommt, wenn die Welle eine Unwucht aufweist. Im Falle einer Unwucht wird sich der Abstand zwischen der Welle und der Elektrode während der Rotation der Welle ortsabhängig ändern, so dass aufgrund des Zusammenhangs $i \approx C * dU_g/dt + U_g * dC/dt$ (C: Messkapazität, $U_g$: Welle-Gehäuse-Spannung, i: Strom) neben dem elektrischen Verschiebestrom im Falle einer elektrischen Entladung der Welle zusätzlich auch ein Stromanteil auftritt, der nichts mit dem Entladevorgang zu tun hat und der allein auf die zeitliche Variation des Spalts aufgrund der Unwucht der Welle zurückzuführen ist. Dieser Stromanteil $I_f = U_g * dC/dt$ wird bei einem ringförmigen Spalt nicht merklich stören, da nämlich während der Rotation der Welle zwar manche Ringabschnitte zeitweise einen kleineren Abstand zur Welle aufweisen mögen als sonst, jedoch die gegenüberliegenden Ringabschnitte im Gegentakt einen größeren Abstand zu der Welle einnehmen werden, so dass eine Kompensation eintritt, weil der Faktor dC/dt klein bleibt.

Vorzugsweise wird die Messkapazität durch eine ringförmige Elektrode gebildet, also eine Elektrode, die sowohl eine kreisförmige Innenkontur als auch eine kreisförmige Außenkontur aufweist.

Gemäß einer bevorzugten Ausgestaltung des Verfahrens ist vorgesehen, dass das Auslösekriterium als erfüllt angesehen wird, wenn der Verschiebestrom oder eine mit diesem Verschiebestrom gebildete Messgröße einen vorgegebenen Grenzstrom erreicht oder überschreitet.

Gemäß einer anderen bevorzugten Ausgestaltung des Verfahrens ist vorgesehen, dass der Verschiebstrom durch einen Widerstand geleitet wird und das Auslösekriterium als erfüllt angesehen wird, wenn die an dem Widerstand abfallende Messspannung oder eine daraus abgeleitete Größe ein vorgegebenes Spannungsauslösekriterium erfüllt. Vorzugsweise wird das Spannungsauslösekriterium als erfüllt angesehen, wenn die an dem Widerstand abfallende Messspannung oder eine daraus abgeleitete Größe eine vorgegebene Grenzspannung erreicht oder überschreitet.

Um externe Störeinflüsse zu unterdrücken, wird es als vorteilhaft angesehen, wenn die an dem Widerstand abfallende Messspannung einer Hochpass- und/oder Bandpassfilterung unterzogen wird und das Messsignal erzeugt wird, wenn die gefilterte Messspannung oder eine daraus abgeleitete Größe das vorgegebene Spannungsauslösekriterium erfüllt.

Die Erfindung bezieht sich darüber hinaus auf eine Anordnung mit einer elektrischen Maschine, insbesondere einem Elektromotor oder einem elektrischen Generator, die eine in einem Gehäuse mittels zumindest eines Lagers drehbar gelagerte Welle aufweist, und mit einer Messeinrichtung zur Lagerstromüberwachung.

Der Erfindung liegt diesbezüglich die Aufgabe zugrunde, eine Anordnung anzugeben, die möglichst verschleißunabhängig ist und eine Lagerstromüberwachung unabhängig davon ermöglicht, ob Lager, die die Welle der Maschine lagern, gegenüber dem Gehäuse der Maschine elektrisch isoliert sind oder nicht. Diese Aufgabe wird erfindungsgemäß durch eine Anordnung mit den Merkmalen gemäß Patentanspruch 7 gelöst.

Vorteilhafte Ausgestaltungen der erfindungsgemäßen Anordnung sind in Unteransprüchen angegeben.

Bezüglich der Vorteile der erfindungsgemäßen Anordnung sei auf die obigen Ausführungen im Zusammenhang mit dem erfindungsgemäßen Verfahren verwiesen, da die Vorteile der Anordnung denen des erfindungsgemäßen Verfahrens im Wesentlichen entsprechen.

Die Erfindung wird nachfolgend anhand von Ausführungsbeispielen näher erläutert; dabei zeigen beispielhaft

Figur 1 ein erstes Ausführungsbeispiel für eine Anordnung mit einer elektrischen Maschine und einer Messeinrichtung zur Lagerstromüberwachung in einem Längsschnitt;

Figur 2 die Lagerung einer Welle der Anordnung gemäß Figur 1 in einem Querschnitt;

Figur 3 die Positionierung einer Elektrode der Anordnung gemäß Figur 1 in einem Querschnitt;

Figur 4 ein elektrisches Ersatzschaltbild eines ersten Ausführungsbeispiels einer Auswerteinrichtung für die Anordnung gemäß Figur 1;

Figur 5 ein zweites Ausführungsbeispiel für eine Auswerteinrichtung für die Anordnung gemäß Figur 1;

Figur 6 ein zweites Ausführungsbeispiel für eine Anordnung mit einer elektrischen Maschine und einer Messeinrichtung zur Lagerstromüberwachung, wobei eine Elektrode der Anordnung eine ringförmige Innen- und Außenkontur aufweist;

Figur 7 die Lagerung einer Welle der Anordnung gemäß Figur 6 und

Figur 8 ein drittes Ausführungsbeispiel für eine Anordnung mit einer elektrischen Maschine und einer Messeinrichtung zur Lagerstromüberwachung, wobei eine Elektrode der Anordnung eine ringförmige Innenkontur und eine beliebig anders geformte Außenkontur aufweist.

In den Figuren werden der Übersicht halber für identische oder vergleichbare Komponenten stets dieselben Bezugszeichen verwendet.

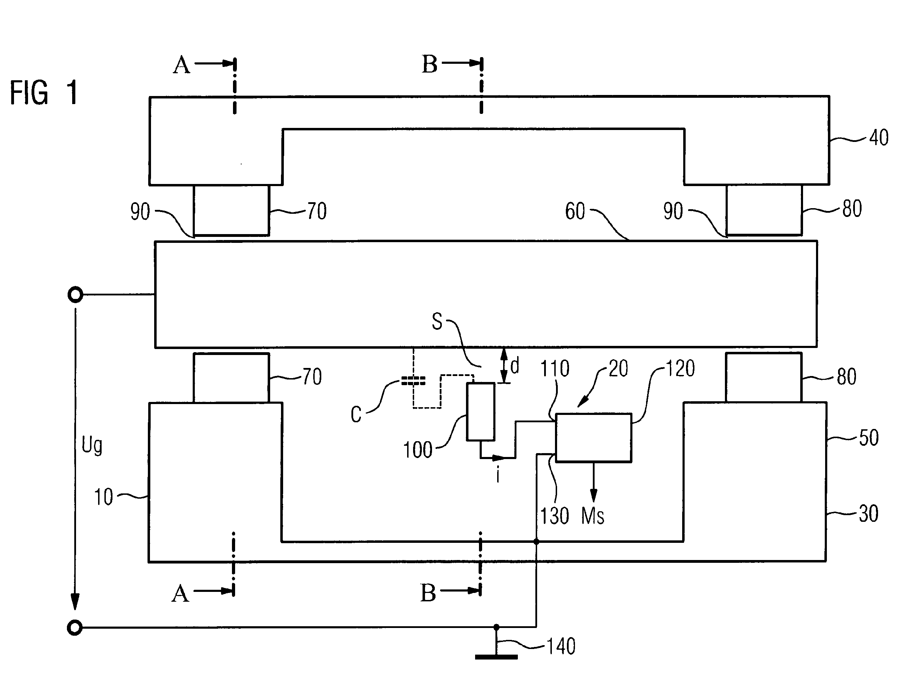

In der Figur 1 ist ein Ausführungsbeispiel für eine Anordnung gezeigt, die eine elektrische Maschine 10, bei der es sich beispielsweise um einen Elektromotor oder um einen elektrischen Generator handeln kann, sowie eine Messeinrichtung 20 zur Lagerstromüberwachung aufweist.

Wie sich in der Figur 1 erkennen lässt, ist die Maschine 10 mit einem Gehäuse 30 ausgestattet, das durch ein oberes Gehäuseteil 40 sowie ein unteres Gehäuseteil 50 gebildet ist. Eine Welle 60 der Maschine 10 wird von zwei Lagern 70 und 80 drehbar gehalten. Die beiden Lager 70 und 80 sind in der Figur 1 nur schematisch dargestellt. Zwischen der Welle 60 und den beiden Lagern 70 und 80 oder innerhalb der beiden Lager 70 und 80 befindet sich in der Regel ein Schmiermittelfilm, der in der Figur 1 nicht näher gezeigt ist und nur durch das Bezugszeichen 90 angedeutet wird.

Das Lager 70 sowie das Lager 80 können elektrisch leitend mit den beiden Gehäuseteilen 40 und 50 verbunden sein; stattdessen können beide Lager 70 und 80 auch durch einen in der Figur 1 nicht dargestellten Isolator elektrisch von dem Gehäuse 30 getrennt sein. Ob eine elektrische Isolation zwischen Lager 70 und 80 einerseits und dem Gehäuse 30 andererseits vorhanden ist oder nicht, spielt für die Funktionsweise der Messeinrichtung 20 keine Rolle.

Wie sich in der Figur 1 darüber hinaus erkennen lässt, ist die Messeinrichtung 20 mit einer Elektrode 100 ausgestattet, die in einem Abstand d neben der Welle 60 angeordnet ist. Zwischen der Elektrode 100 und der Welle 60 ist somit ein Spalt vorhanden, der in der Figur 1 mit dem Bezugszeichen S gekennzeichnet ist. Aufgrund des Spalts S wird zwischen der Welle 60 und der Elektrode 100 eine elektrische Messkapazität C gebildet, die in der Figur 1 durch eine gepunktete Linie dargestellt ist.

Die Elektrode 100 ist elektrisch an einen Messeingang 110 einer Auswerteinrichtung 120 angeschlossen. Ein anderer Messeingang 130 der Auswerteinrichtung 120 ist mit der Gehäusemasse 140 verbunden, auf deren Potential elektrisch das Gehäuse 30 der Maschine 10 liegt.

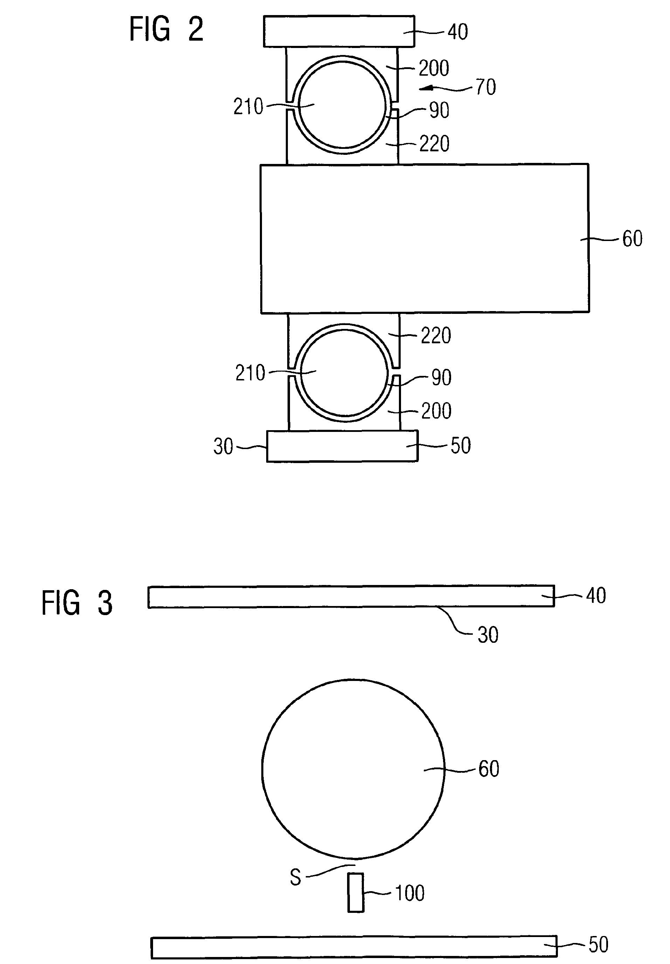

In der Figur 2 ist ein Ausführungsbeispiel für die Lagerung der Welle 60 anhand des Lagers 70 in einem Längsschnitt gezeigt. Man sieht, dass das Lager 70 einen mittelbar oder unmittelbar mit dem Gehäuse 30 in Verbindung stehenden äußeren Lagerring 200 sowie eine Vielzahl an Wälzkörpern 210 aufweist. Die Wälzkörper 210 sind zwischen dem äußeren Lagerring 200 und einem mit der Welle 60 in Verbindung stehenden inneren Lagerring 220 angeordnet. Der innere Lagerring 220 kann Bestandteil des Lagers 70 sein oder zu der Welle 60 gehören; letzteres spielt für die Funktion der Lagerung jedoch keine Rolle.

Zwischen den Wälzkörpern 210 und den beiden Lageringen 200 und 220 befindet sich der Schmiermittelfilm 90. Wie bereits ausgeführt, ist es unerheblich, ob der äußere Lagerring 200 von dem Gehäuse 30 elektrisch isoliert ist oder mit diesem elektrisch in Verbindung steht.

Bei stehender Maschine 10 liegen die Wälzkörper 210 in dem inneren und äußeren Lagerring auf. Die Wälzkörper können Kugeln, Zylinder, Nadeln oder andere Bauformen sein. In aller Regel, vor allem bei sehr großen Maschinen, bestehen die Wälzkörper und die Lagerschalen aus Stahl. Dadurch wird bei einer ruhenden Maschine die Welle 60 mit dem Gehäuse 30 elektrisch kurzgeschlossen. Wenn sich die Welle 60 dreht, laufen die Wälzkörper 210 auf dem Schmiermittelfilm 90; letzterer wird aus einem keilförmigen Schmiermittelvorrat vor dem jeweiligen Wälzkörper gespeist. Der Schmiermittelfilm führt zu einer elektrischen Isolation, die von der Viskosität des Schmiermittels abhängt (ändert sich mit dem Alter, der Temperatur des Lagers etc.). Je nach Maschinengröße kann sich jetzt eine Spannung zwischen Welle 60 und Gehäuse 30 aufbauen, die von den Eigenschaften des Lagers, von der Motoransteuerung (z. B. Frequenzumrichter und dessen Abschluss am Motor, etc.) und von der Qualität des Lagers selbst abhängen kann (Riefen, Rauhigkeiten etc.). Bei einer gewissen Spannung versagt die Isolation des Schmiermittelfilms 90 (bei kleinen Motoren einige 10...12 V, bei großen 70...100 V), und es tritt ein Lagerstrom auf. Die Messung des Lagerstroms wird beispielhaft weiter unten näher erläutert.

In der Figur 3 ist die Welle 60 im Querschnitt dargestellt, und zwar entlang eines Schnitts B-B gemäß Figur 1. Man erkennt die Elektrode 100, die zu der Welle 60 beabstandet angeordnet ist, so dass sich der Spalt S ausbildet. Die mit der Elektrode 100 verbundene Auswerteinrichtung ist in diesem Schnitt nicht erkennbar.

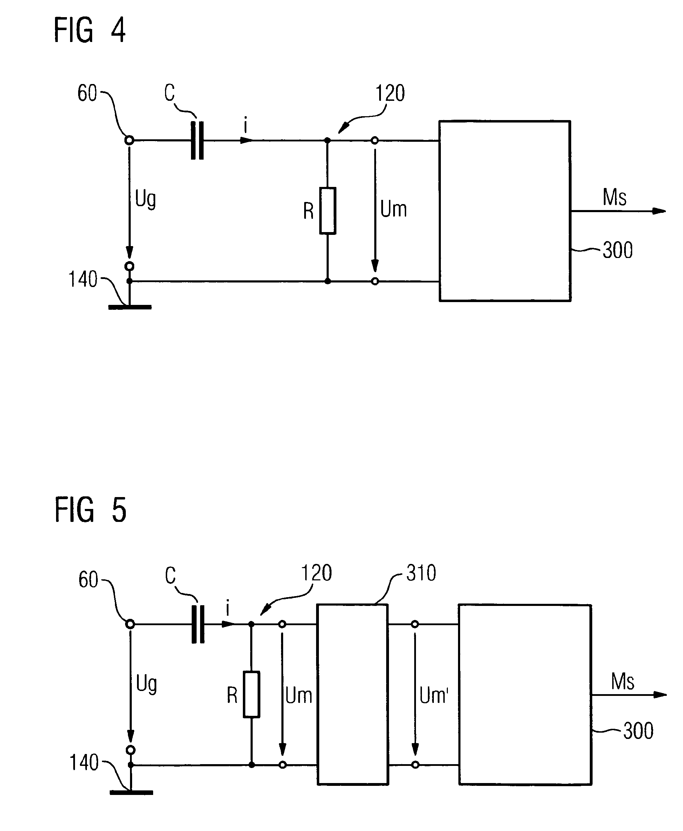

Im Zusammenhang mit der Figur 4 soll nun erläutert werden, wie die Auswerteinrichtung 120 gemäß Figur 1 arbeitet. Hierzu ist in der Figur 4 das elektrische Ersatzschaltbild der Auswerteinrichtung 120 beispielhaft gezeigt. Man erkennt in der Figur 4 die Messkapazität C, an der ein elektrischer Widerstand R angeschlossen ist. Dem Widerstand R ist ein elektrischer Komparator 300 nachgeordnet.

Kommt es nun zu einer Änderung des an der Welle 60 anliegenden elektrischen Potentials, beispielsweise weil ein elektrischer Entladungsstrom fließt, so wird sich demgemäß die elektrische Spannung Ug zwischen der Welle 60 und der Gehäusemasse 140 ändern. Aufgrund dieser Spannungsänderung wird es einen elektrischen Verschiebestrom i geben, der durch den Widerstand R fließt und der zu einem Spannungsabfall an diesem Widerstand R führt. Für den Strom i gilt näherungsweise:

$$i \approx C * dUg/dt$$

Der Spannungsabfall an dem Widerstand R wird als Messspannung Um weiterverwendet und in den Komparator 300 eingespeist. Der Komparator 300 vergleicht die Messspannung Um mit einer vorgegebenen Mindestspannung und erzeugt ein einen Lagerstromfluss anzeigendes Messsignal Ms, wenn die Messspannung Um die vorgegebene Mindestspannung überschreitet.

Die Werte für R und C werden vorzugsweise jeweils an die Art der Maschine (Motor / Generator, Baugröße, Konstruktion, Leistung) angepasst; hierzu werden beispielsweise mit unterschiedlichen Werten für R und C Testmessungen durchgeführt, bis ein R/C-Wertepaar mit für die jeweilige Maschine optimalen Messeigenschaften bestimmt worden ist.

Beispielsweise erzeugt der Komparator 300 ein binäres Messsignal, z. B. mit einer logischen 1, wenn die vorgegebene Mindestspannung überschritten wird. Stellt der Komparator 300 hingegen fest, dass die Spannung Um die vorgegebene Mindestspannung nicht erreicht, so erzeugt er ausgangsseitig als Messsignal Ms beispielsweise ein binäres Ausgangssignal mit einer logischen 0.

Die Auswerteinrichtung 120 macht sich zunutze, dass ein Entladungsstrom von der Welle 60 über die Lager 70 oder 80 zu dem Gehäuse 30 stets zu einer relativ großen Spannungsänderung dUg/dt führt und dass demgemäß im Falle eines Lagerstromflusses eine entsprechend große Spannung Um auftreten wird, die von dem Komparator 300 feststellbar ist. Andere Stromflüsse hingegen, die nicht auf einer Entladung eines an der Welle 60 anliegenden Potentials beruhen, werden in der Regel geringere zeitliche Änderungen aufweisen, so dass diese von der Auswerteinrichtung 120 nicht erfasst werden, da nämlich der Quotient dUg/dt bei diesen anderen Stromflüssen zu gering sein wird.

In der Figur 5 ist eine alternative Ausführungsform für die Auswerteinrichtung 120 gemäß Figur 1 gezeigt. Bei diesem Ausführungsbeispiel weist die Auswerteinrichtung 120 neben dem Komparator 300 einen Bandpass 310 auf, der elektrisch zwischen dem elektrischen Widerstand R und dem Komparator 300 angeordnet ist.

Die Funktion des Bandpasses 310 besteht darin, Störfrequenzen, die nicht auf einen Entladevorgang an der Welle 60 zurückgehen, aus der Messspannung Um herauszufiltern und eine gefilterte Messspannung Um' zu bilden, damit Störfrequenzen die Arbeitsweise des Komparators 300 nicht beeinträchtigen. Vorzugsweise wird der Bandpass in einem Frequenzbereich zwischen 1 MHz und 100 MHz eine nur geringe Dämpfung aufweisen, da in diesem Frequenzbereich die von der Auswerteinrichtung 120 zu erfassenden Frequenzen des Entladestroms liegen werden. Außerhalb des genannten Frequenzbereichs zwischen 1 MHz und 100 MHz wird das Signal Um unterdrückt.

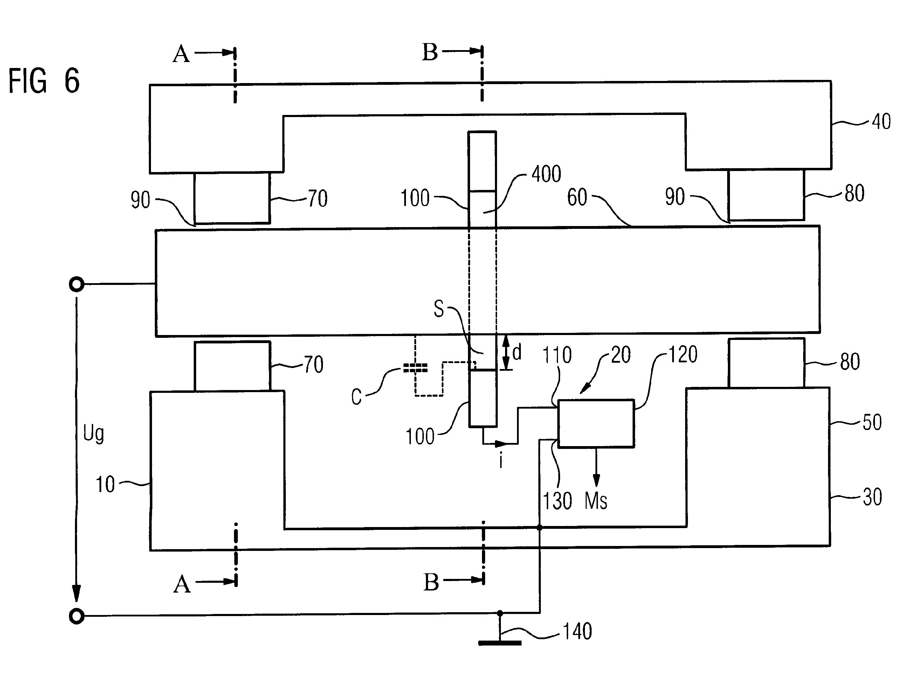

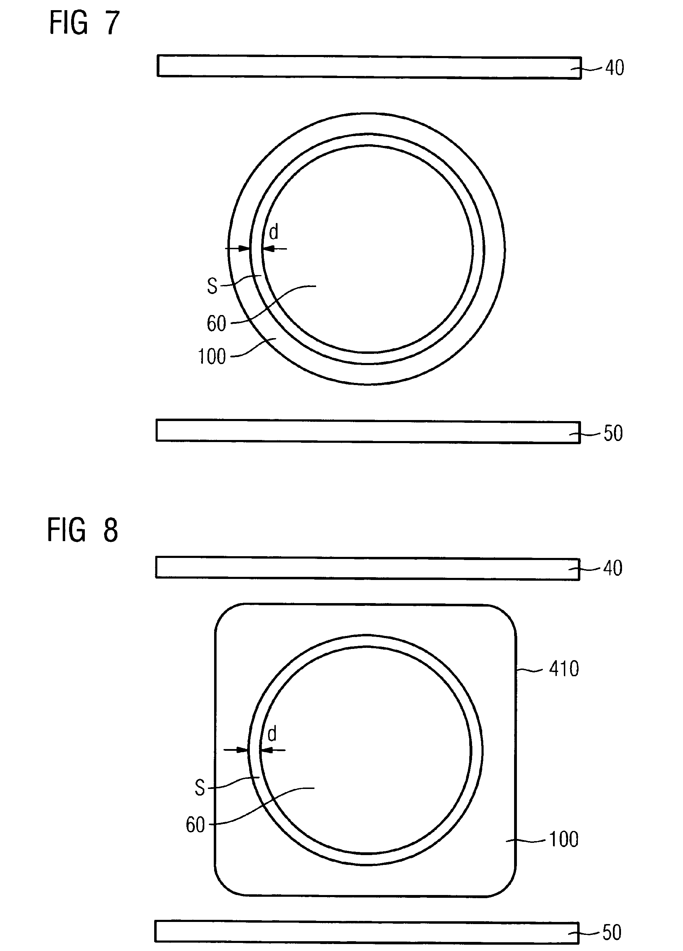

In der Figur 6 ist ein zweites Ausführungsbeispiel für eine Anordnung mit einer Maschine 10 und einer Messeinrichtung 20 gezeigt. Im Unterschied zu dem Ausführungsbeispiel gemäß Figur 1 ist bei dem Ausführungsbeispiel gemäß Figur 6 die Ausgestaltung der Elektrode 100 anders gewählt. So erkennt man in der Figur 6, dass die Elektrode 100 nicht stabförmig an die Welle 60 herangeführt ist, wie dies beispielhaft in der Figur 3 gezeigt ist, sondern statt dessen eine ringförmige Öffnung 400 aufweist, durch die die Welle 60 hindurchgeführt ist. Der mechanische Aufbau der Elektrode 100 sowie die Anordnung der Welle 60 relativ zu der Elektrode 100 ist nochmals in der Figur 7 im Querschnitt entlang der Querschnittslinie B-B gemäß Figur 6 dargestellt. Man erkennt, dass die Elektrode 100 ringförmig ausgestaltet ist und sowohl bezüglich ihrer Innenkontur als auch bezüglich ihrer Außenkontur kreisförmig ist. Aufgrund der kreisförmigen Innenkontur bildet sich zwischen der Welle 60 und der Elektrode 100 ein ringförmiger Spalt S.

Ein wesentlicher Vorteil der ringförmigen Ausgestaltung der Elektrode 100 ist darin zu sehen, dass im Falle einer Unwucht der Welle 60 ein deutlich geringerer Fehlerstrom auftreten wird als bei dem Ausführungsbeispiel gemäß Figur 1. Dies soll nachfolgend kurz näher erläutert werden:

Ist die Welle 60 bei dem Ausführungsbeispiel gemäß Figur 1 nicht ideal gelagert und tritt eine Unwucht auf, so wird sich der Abstand d zwischen der Welle 60 und der Elektrode 100 während der Rotation der Welle 60 ändern, so dass aufgrund des Zusammenhangs

$$i \approx C * dUg/dt + Ug * dC/dt$$

neben dem elektrischen Verschiebestrom während einer elektrischen Entladung der Welle 60 zusätzlich auch ein Stromanteil auftritt, der nichts mit dem Entladevorgang zu tun hat und der allein auf die zeitliche Variation des Spalts S aufgrund der Unwucht der Welle zurückzuführen ist. Dieser Stromanteil bzw. Fehlerstrom berechnet sich also gemäß:

$$If = Ug * dC/dt$$

Der Fehlerstrom If wird bei dem Ausführungsbeispiel gemäß Figur 6 nicht merklich stören, da nämlich im Falle einer Unwucht während der Rotation der Welle zwar manche Ringabschnitte zeitweise einen kleineren Abstand zur Welle aufweisen werden als sonst, jedoch die gegenüberliegenden Ringabschnitte im Gegentakt einen größeren Abstand zu der Welle 60 aufweisen werden. Es kommt also mit anderen Worten zu einer Kompensation und einer weitgehenden Eliminierung des Fehlerstroms, da diejenigen Ringabschnitte, die aufgrund eines geringeren Abstands zwischen Welle 60 und Ringelektrode 100 zeitweise zu einer großen Kapazität führen würden, von anderen Ringabschnitten kompensiert werden, deren Kapazitätsanteil aufgrund des größeren Abstands zwischen Welle 60 und Ringelektrode 100 gerade kleiner wird.

Zusammengefasst wird sich bei dem Ausführungsbeispiel gemäß Figur 6 aufgrund der ringförmigen Innenkontur der Elektrode 100 und damit aufgrund der Ringform des Spalts S eine bessere Messgenauigkeit als bei der Elektrodenausgestaltung gemäß Figur 1 ergeben.

In der Figur 8 ist ein drittes Ausführungsbeispiel für die Ausgestaltung der Elektrode 100 gemäß Figur 1 bzw. Figur 6 gezeigt. Die Figur 8 zeigt die Elektrode 100 im Querschnitt sowie die Anordnung der Welle 60, die durch die Elektrode 100 hindurchgeführt ist. Man erkennt in der Figur 8, dass die Elektrode 100 eine ringförmige Innenkontur aufweist, so dass sich ein ringförmiger Spalt S zwischen der Elektrode 100 und der Welle 60 bildet.

Im Unterschied zu dem Ausführungsbeispiel gemäß Figur 6 ist die Elektrode 100 jedoch bezüglich ihrer Außenkontur 410 nicht ringförmig, sondern beliebig anders ausgestaltet.

Aufgrund der ringförmigen Innenkontur und aufgrund der Ringform des Spalts S ergibt sich wiederum die bereits im Zusammenhang mit den Figuren 6 und 7 erläuterte Fehlerkompensation im Falle einer mechanischen Unwucht der Welle 60, da nämlich im Falle eines sich zeitlich ändernden Abstands d zwischen einzelnen Abschnitten der Elektrode 100 und der Welle 60 andere, in der Regel die jeweils gegenüberliegenden Elektrodenabschnitte einen größeren Abstand aufweisen werden, so dass es insgesamt zu einer Kompensation des Fehlerstroms

$$If = Ug * dC/dt$$

kommen wird, weil der Faktor dC/dt sehr klein wird.

**Patentansprüche**

1. Verfahren zur Lagerstromüberwachung einer elektrischen Maschine (10), insbesondere eines Elektromotors oder eines elektrischen Generators, die eine in einem Gehäuse (30) mittels zumindest eines Lagers (70, 80) drehbar gelagerte Welle (60) aufweist, **dadurch gekennzeichnet, dass**

    - mit einer in einem Abstand (d) zu der Welle angeordneten Elektrode (100) und mit der Welle - aufgrund des Spalts (S) zwischen Elektrode und Welle - eine Messkapazität (C) gebildet wird und ein elektrischer Verschiebestrom (i) gemessen wird, der im Falle einer zeitlichen Änderung (dUg/dt) der zwischen der Welle und dem Gehäuse anliegenden Spannung (Ug) durch diese Messkapazität fließt, und
    - ein einen Lagerstromfluss anzeigendes Messsignal (Ms) erzeugt wird, wenn der Verschiebestrom oder eine mit diesem Verschiebestrom gebildete Messgröße ein vorgegebenes Auslösekriterium erfüllt.

2. Verfahren nach Anspruch 1, **dadurch gekennzeichnet, dass** die Messkapazität mit einer Elektrode gebildet wird, die eine kreisförmige Innenkontur (400) aufweist, durch die die Welle hindurchgeführt ist und die konzentrisch zu der Welle derart angeordnet ist, dass der Spalt ringförmig ist.

3. Verfahren nach einem der voranstehenden Ansprüche, **dadurch gekennzeichnet, dass** das Auslösekriterium als erfüllt angesehen wird, wenn der Verschiebestrom oder eine mit diesem Verschiebestrom gebildete Messgröße einen vorgegebenen Grenzstrom erreicht oder überschreitet.

4. Verfahren nach einem der voranstehenden Ansprüche, **dadurch gekennzeichnet, dass**

    - der Verschiebestrom durch einen Widerstand (R) geleitet wird und
    - das Auslösekriterium als erfüllt angesehen wird, wenn die an dem Widerstand abfallende Messspannung oder eine daraus abgeleitete Größe ein vorgegebenes Spannungsauslösekriterium erfüllt.

5. Verfahren nach Anspruch 4, **dadurch gekennzeichnet, dass** das Spannungsauslösekriterium als erfüllt angesehen wird, wenn die an dem Widerstand abfallende Messspannung oder eine daraus abgeleitete Größe eine vorgegebene Grenzspannung erreicht oder überschreitet.

6. Verfahren nach einem der voranstehenden Ansprüche, **dadurch gekennzeichnet, dass** die an dem Widerstand abfallende Messspannung einer Hochpass-und/oder Bandpassfilterung unterzogen wird und das Messsignal erzeugt wird, wenn die gefilterte Messspannung oder eine daraus abgeleitete Größe das vorgegebene Spannungsauslösekriterium erfüllt.

7. Anordnung mit einer elektrischen Maschine (10), insbesondere einem Elektromotor oder einem Generator, die eine in einem Gehäuse (30) mittels zumindest eines Lagers (70, 80) drehbar gelagerte Welle (60) aufweist, und mit einer Messeinrichtung (20) zur Lagerstromüberwachung, **dadurch gekennzeichnet, dass**

    - die Messeinrichtung eine in einem Abstand (d) zu der Welle angeordnete Elektrode (100) aufweist, die mit der Welle aufgrund des Spalts (S) zwischen der Welle und der Elektrode eine Messkapazität (C) bildet, und
    - die Messeinrichtung eine Auswerteinrichtung (120) aufweist, die

        - mit der Elektrode verbunden ist und einen elektrischen Verschiebestrom (i) erfasst, der im Falle einer zeitlichen Änderung der zwischen der Welle und dem Gehäuse anliegenden Spannung (Ug) durch diese Messkapazität (C) fließt, und
        - ein einen Lagerstromfluss anzeigendes Messsignal erzeugt, wenn der Verschiebestrom oder eine mit diesem Verschiebestrom gebildete Messgröße ein vorgegebenes Auslösekriterium erfüllt.

8. Anordnung nach Anspruch 7, **dadurch gekennzeichnet, dass** die Elektrode (100) eine kreisförmige Innenkontur aufweist, die konzentrisch zu der Welle angeordnet ist, so dass der Spalt ringförmig ist.

9. Anordnung nach einem der voranstehenden Ansprüche 7-8,

**dadurch gekennzeichnet, dass**
die Auswerteinrichtung derart ausgestaltet ist, dass sie das Auslösekriterium als erfüllt ansieht, wenn der Verschiebestrom oder eine mit diesem Verschiebestrom gebildete Messgröße einen vorgegebenen Grenzstrom erreicht oder überschreitet.

10. Anordnung nach einem der voranstehenden Ansprüche 7-9,
**dadurch gekennzeichnet, dass**

- die Auswerteinrichtung einen elektrischen Widerstand aufweist, der an die Elektrode angeschlossen ist, und
- die Auswerteinrichtung derart ausgestaltet ist, dass sie das Auslösekriterium als erfüllt ansieht, wenn die an dem Widerstand abfallende Messspannung oder eine daraus abgeleitete Größe ein vorgegebenes Spannungsauslösekriterium erfüllt.

11. Anordnung nach Anspruch 10,
**dadurch gekennzeichnet, dass**
die Auswerteinrichtung derart ausgestaltet ist, dass sie das Auslösekriterium als erfüllt ansieht, wenn die an dem Widerstand abfallende Messspannung oder eine daraus abgeleitete Größe eine vorgegebene Grenzspannung erreicht oder überschreitet.

12. Anordnung nach einem der voranstehenden Ansprüche 7-11,
**dadurch gekennzeichnet, dass**

- die Auswerteinrichtung einen Hochpass und/oder Bandpass (310) aufweist, der an den elektrischen Widerstand angeschlossen ist, und
- die Auswerteinrichtung derart ausgestaltet ist, dass sie das Auslösekriterium als erfüllt ansieht, wenn die gefilterte Messspannung oder eine daraus abgeleitete Größe das vorgegebene Spannungsauslösekriterium erfüllt.

**Claims**

1. Method for monitoring the bearing current in an electrical machine (10) in particular an electric motor or an electrical generator, which has a shaft (60) which is mounted by means of at least one bearing (70, 80) in a housing (30) such that it can rotate, **characterized in that**

- a measurement capacitance (C) is formed by an electrode (100), which is arranged at a distance (d) from the shaft, and by the shaft - on the basis of the gap (S) between the electrode and the shaft - and an electrical displacement current (i) is measured which flows through this measurement capacitance when the voltage (Ug) which is present between the shaft and the housing rate of change (dUg/dt), and
- a measurement signal (Ms) which indicates a bearing current flow is produced when the displacement current or a measurement variable formed by this displacement current complies with a predetermined initiation criterion.

2. Method according to Claim 1, **characterized in that** the measurement capacitance is formed by an electrode which has a circular internal contour (400), through which the shaft is passed and which is arranged concentrically with respect to the shaft such that the gap is annular.

3. Method according to one of the preceding claims, **characterized in that** the initiation criterion is considered to be satisfied when the displacement current or a measurement variable formed by this displacement current reaches or exceeds a predetermined limit current.

4. Method according to one of the preceding claims, **characterized in that**

- the displacement current is passed through a resistance (R), and
- the initiation criterion is considered to be satisfied when the measurement voltage dropped across the resistance, or a variable derived from it, satisfies a predetermined voltage initiation criterion.

5. Method according to Claim 4, **characterized in that** the voltage initiation criterion is considered to be satisfied when the measurement voltage dropped across the resistance, or a variable derived from it, reaches or exceeds a predetermined limit voltage.

6. Method according to one of the preceding claims, **characterized in that** the measurement voltage dropped across the resistance is subjected to highpass and/or bandpass filtering, and the measurement signal is produced when the filtered measurement voltage, or a variable derived from it, satisfies the predetermined voltage initiation criterion.

7. Arrangement having an electric machine (10), in particular an electric motor or a generator, which has a shaft (60) which is mounted by means of at least one bearing (70, 80) in a housing (30) such that it can rotate, and having a measurement device (20) for monitoring the bearing current, **characterized in that**

- the measurement device has an electrode (100) which is arranged at a distance (d) from the shaft and, together with the shaft, forms a measurement capacitance (C) on the basis of the gap (S) between the shaft and the electrode, and

- the measurement device has an evaluation device (120) which

  - is connected to the electrode and detects an electric displacement current (i) which flows through this measurement capacitance (c) when the voltage (Ug) which is present between the shaft and the housing rate of change, and
  - produces a measurement signal, which indicates a bearing current flow, when the displacement current or a measurement variable formed by this displacement current complies with a predetermined initiation criterion.

8. Arrangement according to Claim 7, **characterized in that** the electrode (100) has a circular internal contour, which is arranged concentrically with respect to the shaft, such that the gap is annular.

9. Arrangement according to one of the preceding Claims 7-8, **characterized in that** the evaluation device is designed such that it considers the initiation criterion to be satisfied when the displacement current or a measurement variable formed by this displacement current reaches or exceeds a predetermined limit current.

10. Arrangement according to one of the preceding Claims 7-9, **characterized in that**

    - the evaluation device has an electrical resistance which is connected to the electrode, and
    - the evaluation device is designed such that it considers the initiation criterion to be satisfied when the measurement voltage dropped across the resistance or a variable derived from it satisfies a predetermined voltage initiation criterion.

11. Arrangement according to Claim 10, **characterized in that** the evaluation device is designed such that it considers the initiation criterion to be satisfied when the measurement Voltage dropped across the resistance or a variable derived from it reaches or exceeds a predetermined limit voltage.

12. Arrangement according to one of the preceding Claims 7-11, **characterized in that**

    - the evaluation device has a high-pass filter and/or a bandpass filter (310), which is connected to the electrical resistance, and

- the evaluation device is designed such that it considers the initiation criterion to be satisfied when the filtered measurement voltage or a variable derived from it satisfies the predetermined voltage initiation criterion.

**Revendications**

1. Procédé de contrôle du courant de palier d'une machine ( 10 ) électrique, notamment d'un moteur électrique ou d'un générateur électrique, qui a un arbre ( 60 ) monté tournant dans une enveloppe ( 30 ) au moyen d'au moins un palier ( 70, 80 ), **caractérisé en ce que**

   - on forme une capacité ( C ) de mesure par une électrode ( 100 ) disposée à une distance ( d ) de l'arbre et par l'arbre - en raison de l'intervalle ( S ) compris entre l'électrode et l'arbre - et on mesure un courant ( i ) électrique de déplacement qui, dans le cas d'une variation ( dUg/dt ) dans le temps de la tension ( Ug ) s'appliquant entre l'arbre et l'enveloppe, passe dans cette capacité de mesure, et
   - on produit un signal ( Ms ) de mesure indiquant le flux de courant de palier lorsque le courant de déplacement ou une grandeur de mesure formée par ce courant de déplacement satisfait un critère de déclenchement prescrit.

2. Procédé suivant la revendication 1, **caractérisé en ce qu'**on forme la capacité de mesure par une électrode qui a un contour ( 400 ) intérieur circulaire dans lequel l'arbre passe et qui est disposée concentriquement à l'arbre de sorte que l'intervalle est annulaire.

3. Procédé suivant l'une des revendications précédentes, **caractérisé en ce que** le critère de déclenchement est considéré comme satisfait lorsque le courant de déplacement ou une grandeur de mesure formée par ce courant de déplacement atteint ou dépasse un courant limite prescrit.

4. Procédé suivant l'une des revendications précédentes, **caractérisé en ce que**

   - on fait passer le courant de déplacement dans une résistance ( R ) et
   - on considère le critère de déclenchement comme satisfait lorsque la tension de mesure chutant aux bornes de la résistance ou une grandeur qui s'en déduit satisfait un critère de déclenchement de tension prescrit.

5. Procédé suivant la revendication 4, **caractérisé en ce que** on considère le critère de déclenchement de tension comme satisfait lorsque la tension de mesure chutant aux bornes de la résistance ou une grandeur qui s'en déduit atteint ou dépasse une tension limite prescrite.

6. Procédé suivant l'une des revendications précédentes, **caractérisé en ce que** l'on soumet la tension de mesure chutant aux bornes de la résistance a un filtrage passe haut et/ou à un filtrage de bande et on produit le signal de mesure lorsque la tension de mesure filtrée ou une grandeur en dérivant satisfait le critère de déclenchement de tension prescrit.

7. Dispositif comprenant une machine ( 10 ) électrique, notamment un moteur électrique ou un générateur, qui a un arbre ( 60 ) monté tournant dans une enveloppe ( 30 ) au moyen d'au moins un palier ( 70, 80 ) et un dispositif ( 20 ) de mesure pour le contrôle de courant de palier,
**caractérisé en ce que**

- le dispositif de mesure comporte une électrode ( 100 ) à une distance ( d ) de l'arbre qui forme une capacité ( C ) de mesure par l'arbre en raison de l'intervalle ( S ) entre l'arbre et l'électrode, et
- le dispositif de mesure comporte un dispositif ( 120 ) d'exploitation qui
- est relié à l'électrode et détecte un courant ( i ) électrique de déplacement qui, dans le cas d'une variation dans le temps de la tension ( Ug ) s'appliquant entre l'arbre et l'enveloppe, passe dans cette capacité ( C ) de mesure,
- produit un signal de mesure indiquant un flux de courant de palier lorsque le courant de déplacement ou une grandeur de mesure formée à partir de ce courant de déplacement satisfait à un critère de déclenchement prescrit.

8. Dispositif suivant la revendication 7, **caractérisé en ce que** l'électrode ( 100 ) a un contour intérieur circulaire qui est concentrique à l'arbre de sorte que l'intervalle est annulaire.

9. Procédé suivant l'une des revendications 7 ou 8, **caractérisé en ce que** le dispositif d'exploitation est tel qu'il considère le critère de déclenchement comme satisfait lorsque le courant de déplacement ou une grandeur de mesure qui est formée par ce courant de déplacement atteint ou dépasse un courant limite prescrit.

10. Procédé suivant l'une des revendications précédentes 7 à 9, **caractérisé en ce que**

- le dispositif d'exploitation comporte une résistance électrique qui est raccordée à l'électrode, et

- le dispositif d'exploitation est tel qu'il considère le critère de déclenchement comme satisfait lorsque la tension de mesure chutant aux bornes de la résistance ou une grandeur qui s'en déduit satisfait un critère de déclenchement de tension prescrit.

11. Procédé suivant la revendication 10, **caractérisé en ce que** le dispositif d'exploitation est tel qu'il considère le critère de déclenchement comme satisfait lorsque la tension de mesure chutant aux bornes de la résistance ou une grandeur qui s'en déduit atteint ou dépasse une tension limite prescrite.

12. Procédé suivant l'une des revendications précédentes 7 à 11, **caractérisé en ce que**

- le dispositif d'exploitation comporte un passe haut et/ou un passe bande ( 310 ) qui est relié à la résistance électrique, et
- le dispositif d'exploitation est tel qu'il considère le critère de déclenchement comme satisfait lorsque la tension de mesure filtrée ou une grandeur qui s'en déduit satisfait le critère de déclenchement de tension prescrit.

FIG 1

**FIG 2**

**FIG 3**

## FIG 4

```
60          C              i          120
  ○────────┤├──────────────────●────────○────────┐
  │                            │                  │
  │                            │                  │  ┌──────────┐
  │Ug                         ┌─┐                 │  │          │
  ↓                        R  │ │          Um     │  │          │        Ms
  │                           │ │           ↓     │  │   300    │────────→
  │                           └─┘                 │  │          │
140                           │                   │  │          │
  ○────────────────────────────●──────────○───────┘  └──────────┘
  ⏚
```

## FIG 5

```
60          C            i     120         310
  ○────────┤├──────────────●────○──┐   ┌────────┐   ┌──────────┐
  │                        │       │   │        │   │          │
  │                       ┌─┐      │   │        │   │          │
  │Ug                  R  │ │   Um │   │        │Um'│   300    │      Ms
  ↓                      │ │    ↓  │   │        │ ↓ │          │──────→
  │                      └─┘      │   │        │   │          │
140                      │        │   │        │   │          │
  ○────────────────────────●──────○───┘   └────○───┘   └──────────┘
  ⏚
```

FIG 6

EP 2 304 866 B1

FIG 7

d

S

60

100

40

50

FIG 8

d

S

60

40

410

100

50

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006134068 A
- US 4147982 A
- US 4511837 A